# EUROPEAN PATENT APPLICATION

(11) **EP 2 378 633 A1**
(43) Date of publication of application: **19.10.2011**
(21) Application number: 10159746.6
(22) Date of filing: 13.04.2010
(51) Int. Cl.: H02K 1/27

(54) **Electrical machine and permanent-magnet**

(71) Applicant: Siemens Aktiengesellschaft, 80333 München (DE)
(72) Inventor: Andersen, Kurt, 6623 Vorbasse (DK); Groendahl, Erik, 8653 Them (DK); Pedersen, Kenneth, 9800 Hjoerring (DK); Urda, Adriana Cristina, 5230 Odense M (DK)

(57) **Abstract**

The invention relates to an electrical machine, which contains permanent magnets and to the permanent magnets being used.

The electrical machine contains a permanent magnet (PM) and a coil (5). The coil (5) interacts with the permanent magnet (PM) via an air gap (AG), which is located between the permanent magnet (PM) and the coil (5). The permanent magnet (PM) and the coil (5) are arranged in a way that electrical power is generated in the coil (5) when the permanent magnet (PM) or the coil (5) are moved in their relative position to each other. The permanent magnet (PM) contains a surface (MS), which is aligned to the coil (5) and to the air gap (8) in a way, that magnetic forces of the permanent magnet (PM) interact via the surface (MS) and the air gap (AG) with the coil (5) by a magnetic flux density distribution. The surface (MS) contains at least five segments (EP1,...,EP6), which are arranged and shaped in a way that a smooth transition of the magnetic flux density distribution within the air gap (8) is achieved.

## Description

The invention relates to an electrical machine, which contains permanent magnets and to the permanent magnets being used. The invention especially relates to a synchronous machine.

An electrical machine like a generator contains a number of permanent magnets, which interact with at least one coil to generate electrical power. For the magnets used a compromise needs to be found. It is necessary to minimize or even avoid at least some of the following problems:
First of all the magnetic force (magnetic field-strength) of the magnets will vary due to their individual characteristics and tolerances. Periodical torque pulsations will occur if the machine is within the status "no-load", "idling" or "full load".

Next the number and/or the size of used permanent magnets needs to be minimised due to the steadily increasing costs.

The torque stated above is denoted as "cogging torque" if the machine is in "no-load"-status, while it is denoted as "ripple torque" if the machine is "load"-status.

The torque pulsations may result in vibrations, which propagates inside the machine and within a used supporting structure of the machine also. The torque pulsations may harm mechanical and electrical components.

Furthermore the torque pulsations may generate acoustic noise with low frequencies. The frequencies are audible and thus disturb the environment, the human-beings and the wild-life.

Especially if a huge direct drive generator is within a wind turbine the disturbance needs to be reduced or even avoided.

Several techniques are known to reduce "cogging torque" or "ripple torque". For example the permanent magnets are shaped specifically or so called "dummy slots" are used inside the electrical machine.

The magnet shaping is advantageous for a given current and a required torque. The magnet shaping can be done in regard to minimize the amount of magnet material needed.

It is also possible to reduce cogging-torque and/or ripple-torque by an optimized shaping of the magnets.

A huge number of optimized magnet-shapes is known in the prior art.

An important and commonly applied one shows upper magnet corners, which are cut away. This is called chamfering. The chamfer angle used may be 45° but also alternative chamfer angles are known in the prior art. However this kind of chamfering does not reduce the cogging-torque and the ripple-torque to a satisfactory level.

Document EP 1 076 921 A1 describes a magnet piece with a cross sectional geometry. The geometry corresponds to the half-cycle arc of a sine curve. It is very difficult and expensive to manufacture this geometry. Even this approximation does not reduce the cogging-torque and the ripple-torque to a satisfactory level.

It is therefore the aim of the invention to provide an improved permanent magnet to address the problems mentioned above, and to provide an electrical machine, which contains this type of improved permanent magnet.

This aim is reached by the features of claim 1 and by the features of claim 10. Preferred configurations are object of the dependent claims.

According to the invention the electrical machine contains a permanent magnet and a coil. The magnet and the coil interact with the permanent magnet via an air gap, which is located between the permanent magnet and the coil.
The permanent magnet and the coil are arranged in a way that electrical power is generated in the coil when the permanent magnet or the coil is moved in their relative position to each other.
The permanent magnet contains a surface, which is aligned to the coil and to the air gap in a way, that magnetic forces of the permanent magnet interact via the surface and the air gap with the coil by a magnetic flux density distribution.
The surface contains at least five segments, which are arranged and shaped in a way that a smooth transition of the magnetic flux density distribution within the air gap is achieved.

This results in a surface of the magnet with a multiple number of chamfers.

The term "smooth transition" is meant and describes that the magnet size and the corresponding flux density distribution changes gradually in the air gap and in the direction across the slots. Preferably it changes in a sinusoidal manner.

Thus abrupt changes in the flux density distribution are avoided and cogging-torque and/or ripple-torque are/is reduced.

The resulting magnet shape is easy to manufacture due to the preferred plane segments.

Preferably the segments are rectangular and thus show linear sections in a cross-section-view of the surface.

The shape has still the ability to approximate more or less arbitrary shape functions.

The shape of the magnet surface is preferably optimized using numerical methods such as the finite element method. The inventive use of a number of linear segments fits well with the discrete nature of the numerical tools used for the electromagnetic design and optimization.

Preferably the segments approximate at least partly to a sinusoidal outline. This results in a substantially sinusoidal flux density distribution in the air gap and across the slots, used to support the coil.

A good approximation to a sinusoidal arc, preferably a half period of a sinusoidal function, can be achieved by the use of at least five segments. Thus the cogging torque and/or the ripple torque are/is reduced considerably.

The cogging torque and/or the ripple torque is reduced even more if six segments are used. In this case the (active) magnet surface is symmetrical and preferably more flat on the top of the magnet, while the top of the magnet is facing directly to the air gap.

Preferably the magnet surface shows a flat top where the cross sectional shape of the magnet surface has an uneven number of linear sections. Thus the transition zones adjacent to the flat top are symmetrical on both sides. Thus the flat top leaves a longer part of the magnet surface where the air gap distance is kept relatively low.

According to the invention the shaped magnet surface consists of n linear segments where n is equal to or greater than 5. This allows arbitrary lengths and slopes between -90° and 90°.

The number n may be even or odd, the magnet may be symmetrical or unsymmetrical either.

The magnet surface may even have several local height extrema along the surface - e.g. valleys may be present along the surface. This ensures compensation to different harmonics by mixing and approximating an additional sinusoidal function or the like into the magnet surface. For example the sinusoidal function corresponds to a third harmonic of the fundamental.

The invention is not limited to a plane underside of the magnet. Preferably shaped magnets with a curved underside are used. By this "curved underside" the addressed surface is facing the rotor yoke and/or to a base plate, which is opposite to the magnet surface facing to the stator.

Also, shaping may occur at a pole shoe surface instead of the air gap surface or a combination of shaping both surfaces.

When shaping the pole shoe surface, the pole shoe may or may not follow the shape of the magnet. Whether or not the pole shoe is following the shape of the magnet, the present invention covers a corresponding shape type for the pole shoe.

The terms underside and pole shoe surface are used interchangeably throughout the document.

The invention is shown by help of a drawing. The drawing show preferred configurations only and thus do not limit the scope of the claims.
- FIG 1: shows a cross-sectional view of a first magnet according to the invention,
- Fig 2: shows a perspective view of the first magnet according to FIG 1,
- FIG 3: shows a cross-sectional view of a second magnet according to the invention,

- FIG 4: shows a cross-sectional view of a third magnet according to the invention, and
- Fig 5: shows a cross-sectional view of a stator-rotor-assembly, which contains a permanent magnet according to FIG 1.

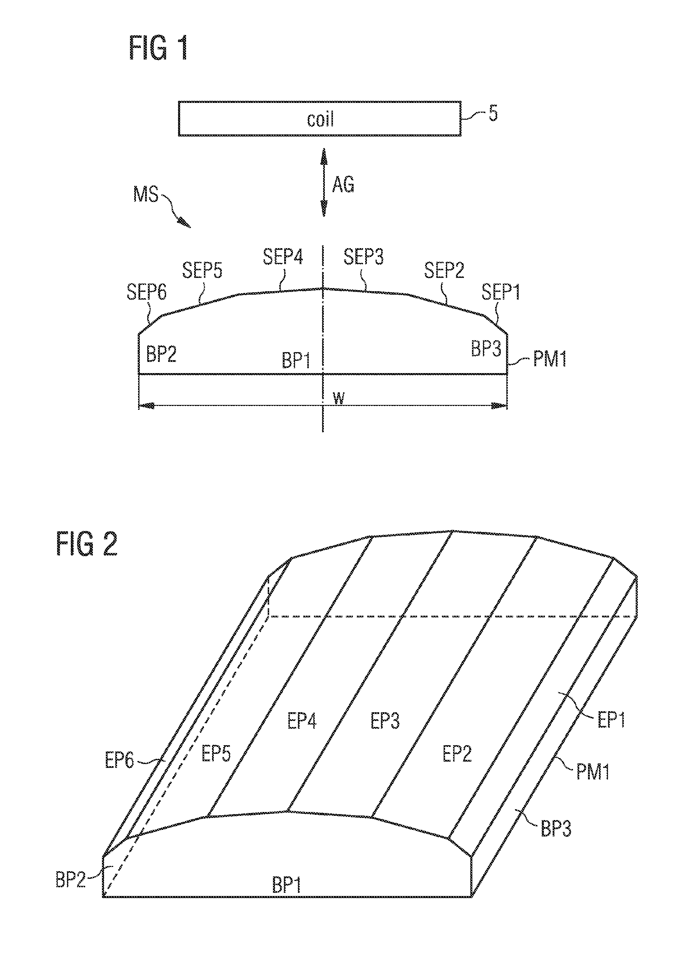

FIG 1 shows a cross-sectional view of a first permanent magnet PM1 according to the invention.

The cross section of the permanent magnet PM1 contains six linear sections SEP1, SEP2, ..., SEP6.

The cross section also shows lines of three base planes BP1, BP2 and BP3. These base planes are shown in more details in FIG 2.

The linear sections SEP1, SEP2, ..., SEP6 are arranged and shaped in a way that a smooth transition at the end points of the magnet PM1 near the base planes BP2 and BP3 is achieved. Due to this a resulting magnet surface MS is facing to a coil 5 of a stator - not shown here in detail.

There is an air-gap AG between the coil 5 of the stator and the permanent magnet PM.

Fig 2 shows a perspective view of the first magnet according to FIG 1.

The permanent magnet PM1 is shaped like a polyhedron, where the magnet-polyhedron contains six segments EP1, EP2, ..., EP6.

Preferably these segments are plane areas. Preferably they are rectangular.

The segments EP1 to EP6 define a chamfered magnet surface MS.

The segments EP1 to EP6 are connected with the three base planes BP1, BP2 and BP3. The base planes BP1 and BP2 are orthogonal to the base plane BP3 of the magnet-polyhedron.

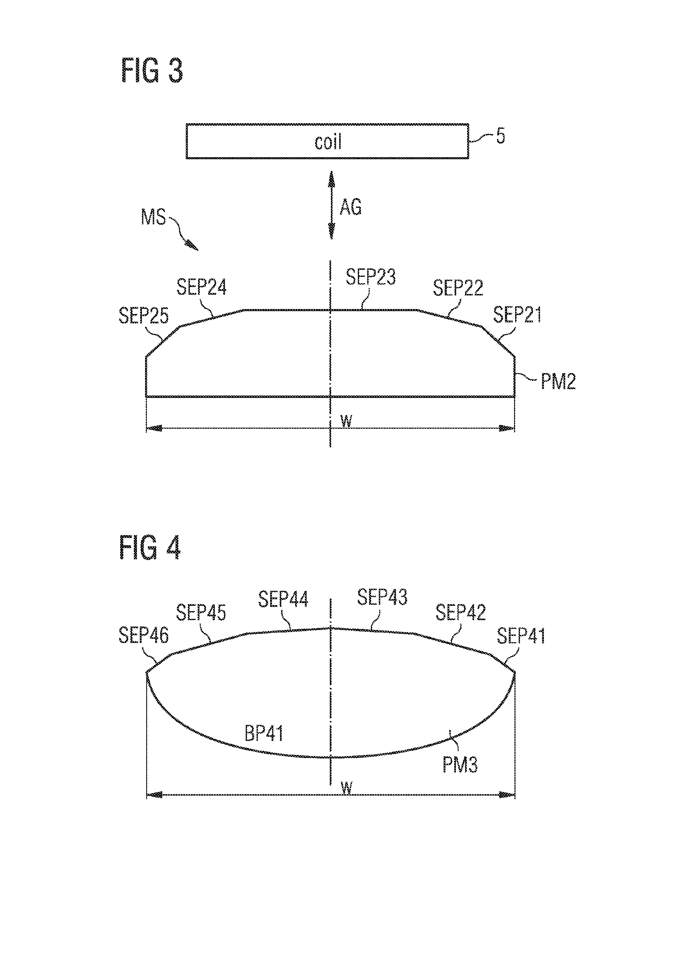

FIG 3 shows a cross-sectional view of a second magnet according to the invention.

The cross section of the permanent magnet PM2 contains five linear sections SEP21, SEP22, ..., SEP25. The cross section also shows lines of base-planes, also referring to FIG 1.

The linear sections SEP21, SEP22, ..., SEP25 are arranged and shaped according to FIG 1 and FIG 2.

One section SEP23 is aligned nearly parallel to the coil 5, thus the assigned segment of this section SEP23 is flat and is located on top of the magnet surface MS.

FIG 4 shows a cross-sectional view of a third magnet PM3 according to the invention.

The cross section of the permanent magnet PM3 contains six linear sections SEP41, SEP42, ..., SEP46. The cross section also shows a line, which belongs to a shaped base plane BP41.

The linear sections SEP41, SEP42, ..., SEP46 are arranged and shaped in a way that a smooth transition at the end points of the magnet PM3 near the base plane BP41 is achieved.

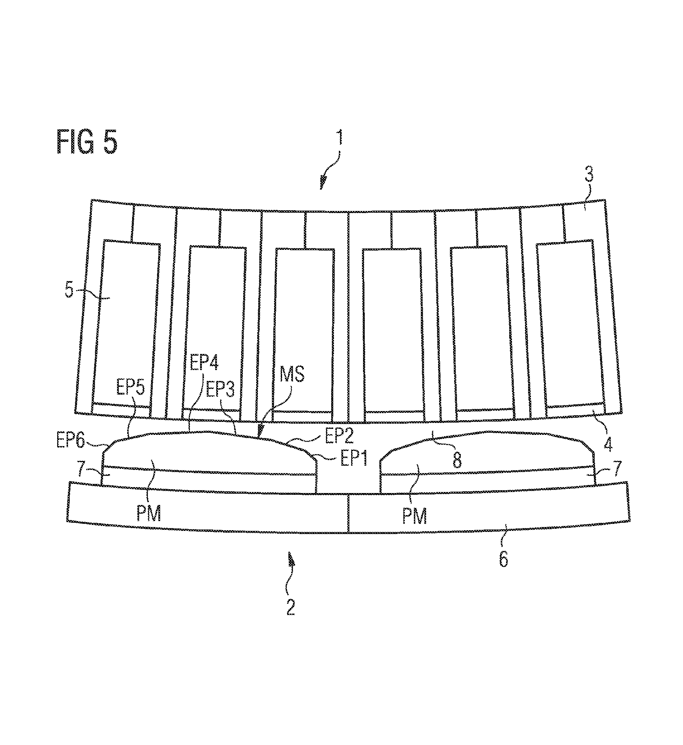

Fig 5 shows a cross-sectional view of a stator-rotor assembly, which contains a permanent magnet according to FIG 1.

The stator 1 comprises a stator laminate 3 with a number of slots 4. The slots 4 are used to support coils 5 of the stator.

The rotor 2 comprises a rotor yoke 6, which supports a number of base plates 7, being used to carry permanent magnets PM. The permanent magnets PM show optimized surfaces MS, with six rectangular sections EP1, EP2, EP3, EP4, EP5, EP6. They define a smooth transition in relation to flux density distribution (not shown) in the air gap, referred here as 8, across the slots.

## Claims

1. Electrical machine with a permanent magnet (PM),
- where the machine contains a coil (5), which interacts with the permanent magnet (PM) via an air gap (AG), which is located between the permanent magnet (PM) and the coil (5),
- where the permanent magnet (PM) and the coil (5) are arranged in a way that electrical power is generated in the coil (5) when the permanent magnet (PM) or the coil (5) are moved in their relative position to each other,
- where the permanent magnet (PM) contains a surface (MS), which is aligned to the coil (5) and to the air gap (8) in a way, that magnetic forces of the permanent magnet (PM) interact via the surface (MS) and the air gap (AG) with the coil (5) by a magnetic flux density distribution, and
- where the surface (MS) contains at least five segments (EP1, ...,EP6), which are arranged and shaped in a way that a smooth transition of the magnetic flux density distribution within the air gap (8) is achieved.

2. Electrical machine according to claim 1, where the cross sectional shape of the surface (MS) comprises at least five linear sections.

3. Electrical machine according to claim 1, wherein the cross sectional shape of the surface (MS) contains planar sections, which are arranged and shaped in a way that an outline of the cross section of the surface (MS) is approximated to a sinusoidal outline, thus a substantially sinusoidal flux density distribution in the air gap is achieved.

4. Electrical machine according to claim 3, wherein the sinusoidal outline is approximated to a half period of a sine function.

5. Electrical machine according to claim 1, wherein one of the segments (EP...) is arranged and shaped in a way that the cross sectional of the surface (MS) shows a flat section (EP23) on top of the magnet surface.

6. Electrical machine according to claim 1, where the electrical machine is a synchronous machine.

7. Electrical machine according to claim 6, where the synchronous machine is a direct drive generator of a wind turbine or an axial flux machine.

8. Electrical machine according to claim 1, where the electrical machine contains a slotted stator, which supports the coil and where the electrical machine contains a rotor, which supports the permanent magnet.

9. Electrical machine according to claim 8, where the segments are arranged and shaped in a way that a sinusoidal outline of the cross section of the surface is at least partly approximated, thus a substantially sinusoidal flux density distribution in the air gap across the slots is achieved.

10. Permanent magnet, which is shaped and arranged within an electrical machine according to one of the claims 1 to 9.

11. Method for shaping a magnet according to claim 10.
